# EUROPEAN PATENT SPECIFICATION

(11) **EP 1 698 229 B1**
(45) Date of publication and mention of the grant of the patent: **08.04.2015**
(21) Application number: 06447027.1
(22) Date of filing: 27.02.2006
(51) Int. Cl.: A21D 6/00, A21D 15/02, A21D 15/08, A21D 13/00

(54) **Glazing composition comprising sugar alcohols and use thereof**
Glaszusammensetzung enthaltend Zuckeralkohol und ihre Verwendung
Composition de glaçage comprenant un ou des alcools de sucre et utilisation

(30) Priority: 01.03.2005 GB 0504185
(43) Date of publication of application: 06.09.2006
(73) Proprietor: Vamix N.V., 9000 Gent (BE)
(72) Inventor: Verhelle, Trui, Vandemoortele Izegem NV, 8870 Izegem (BE); Cnudde, Carine, Vandemoortele Izegem NV, 8870 Izegem (BE); De Laporte, André, Vandemoortele Izegem NV, 8870 Izegem (BE)
(74) Representative: Vanhalst, Koen

(56) References cited:
- EP-A- 1 287 743
- WO-A-2005/013689
- DE-A1- 4 228 278
- US-A- 5 709 896
- US-A1- 2002 015 763
- US-A1- 2002 155 198
- US-A1- 2003 152 683
- US-A1- 2004 197 446

## Description

### Field of the invention

The invention relates to the use of a glazing composition for glazing the outer surface of a pre-baked or prior-to-baking dough product. The present invention further relates to a pre-baked or prior-to-baking dough product and a method for preparing said dough product comprising applying a glazing composition on an upper surface of a dough product.

### Background

Bake-off products involve the manufacture of unbaked (or pre-baked) dough products, which are generally (finally) baked at the point of sale.

It is well known to provide the surface unbaked dough products, especially pastry products, with a glazing before baking the products, whereby such glazing serves as a browning agent. Egg-based glazing compositions are traditionally used to obtain this coloring aspect.

In addition to a colored surface after baking, baked products showing a shiny surface are also highly desired. This is traditionally done by brushing an apricot gel on the surface of the baked product. The apricot gel is made by mixing jam, water and a flavor, and boiling and homogenizing the mixture before application. However, such method is not only labor intensive, but also required skilled labors and experience to apply the apricot gel in a correct way.

In the meantime, ready-to-use glazes, cold applicable with a brush, exists on the market. These glazes may be applied on the surface of the baked products. However, this implies an extra handling after baking, which remains labor intensive.

There is more and more a demand for full convenience whereby the only required handling is baking a frozen product. Therefore, pre-glazed frozen products have been developed. Such products are typically coated with a pre-glaze composition. EP 1 287 743 for instance, describes dough products which are partially coated with a pre-glaze composition comprising complex sugars such as polydextrose sugars. However a problem which has been encountered in the preparation of such pre-glazed products is that the non-baked dough products become very sticky. This stickiness is not only very uncomfortable during the further handling of the products prior to baking, but also very detrimental from a hygienic point of view.

Another problem associated with the use of some prior art glazing compositions is that these composition may induces undesired coloring. Because of this, often an adaptation of baking procedure is necessary. For instance when as glazing agent a Florentinermix, which is a powder composed of glucose syrup, sucrose, oil, emulsifiers, etc, that is generally used to make crispy tarts, biscuits, and like, is used, the baked products not only obtain a shiny and crispy surface, but often also tend to undergo undesired coloration.

In view hereof, there remains a great need in the art for improved glazing compositions, which overcome at least some of the problems of prior art compositions.

GB 2 391 448 relates to a polyol coating, e.g. isomalt, for food products acting as a barrier layer, to preserve the crunchiness and crispiness of food products.

WO 2004/067595 discloses compositions comprising granules of polyols, including maltitol, isomalt, lactitol, and mixtures thereof, with a granule size of from about 200 to about 2000 microns useful for producing sugar-free coatings. The use of these polyol granules for glazing dough products is however not disclosed.

US 5,900,261 relates to crystalline coatings based on a specific mixture of polyols, in particular mannitol or glucose 1-6 mannitol, and at least one of xylitol, maltitol, lactitol, that provide improved crunchiness to a food product.

US 2004/156993 relates to hard coatings. The hard coating is made from sugar/sugar alcohols selected from the group of maltitol, xylitol, erythritol, mannitol, lactitol, PALATINT, trehalose, sucrose and oxidized starch and/or acid treated starch.

It is therefore an object of the present invention to use a glazing composition, which in particular provides non-sticky dough products and which gives the baked product a desired shiny surface and a desired color.

It is further an object of the invention to provide improved pre-glazed products which can be handled in a more comfortable, cleaner and more hygienic way.

The present invention also aims to provide an improved method for preparing pre-glazed products.

### Summary

The present invention provides subject-matter as set forth in any one and all of claims 1 to 21.

The subject-matter provided by the invention specifically belongs to the disclosure, description and teaching of the present specification.The present specification describes the use of a glazing composition, according to claim 1.

The specification also describes a pre-glazed dough product according to claim 3.

The specification also describes a packing, preferably bulk packing, comprising one or more pre-glazed dough products according to claim 6.

The present specification further relates to a method for preparing a pre-glazed dough product, according to claim 7.

It has been shown by the applicant that the use of sugar alcohols for glazing dough products provides better effects than the use of sugars, e.g. mono-, di- or polysaccharides. More in particular, the use of a composition according to claim 1 on the surface of a dough product, results in a dough product that obtains a shiny aspect after final baking, and that in addition does not become sticky before it is finally baked. In other words, pre-glazed dough products according to the invention do not become sticky during production and/or during thawing of the dough product, or during further packaging, storage, unpacking and handling before final baking. Dough products, according to the present invention, can therefore be handled in a cleaner, more hygienic and more comfortable way without getting sticky hands. Moreover, the pre-glazed dough products obtained according to the invention can easily be tumble packed because there is no problem with sticking of one product to another. In addition, the glazing compositions applied on the products will less easily stick on the packaging material and the loss of glazing composition remaining stuck on the packing when unpacking the pre-glazed dough products can be considerably reduced. Thus, especially packing and unpacking of the pre-glazed dough products becomes easier and cleaner in accordance with the present invention.

Another important characteristic of using the glazing composition is that thanks to its physico-chemical properties, the composition does not stick to elements of the powder strewing equipment machine, such that the composition can be applied on dough products in an easy, efficient and clean way.

The advantageous property of the glazing composition of being "non-sticky" may be at least partly assigned to the fact that the glazing composition is (essentially) non-hygroscopic. The term *"hygroscopic"* as used herein refers to the characteristic of readily absorbing moisture as from the atmosphere in an amount sufficient to partially dissolve a significant part of the solid.

The use of sugar alcohols in the glazing composition provides several other important advantages.

The glazing composition may be applied on the surface of the dough product in a controlled manner. More in particular, the glazing composition applied on a dough product will run out uniformly over the surface of the dough product during the backing process. This ensures a uniform and shiny appearance of the backed product, and, furthermore, the present invention also negates the need to apply a glaze to the product after baking.

Another important characteristic of using the glazing composition according claim 1 is that the sugar alcohols used therein provide sweetness which is significantly lower than for mono- or disaccharides. Also, the use of sugar alcohols for glazing dough products provides better effects than the use of sugars, e.g. mono-, di- or polysaccharides, from a caloric point of view. Sugar alcohols are lower in calories and have a lower effect on blood sugar levels than mono-, di- or polysaccharides. Furthermore, sugar alcohols are non-cariogenic, and prebiotic.

The foregoing and other objects, features and advantages of the invention will become more readily apparent from the following detailed description of preferred embodiments.

### Detailed description

The present specification relates to the use of a glazing composition for glazing a dough product, according to claim 1, thereby obtaining a pre-glazed dough product.

The glazing composition used may comprise 50 to 100% by weight of one or more disaccharide sugar alcohols and 0 to 50 % by weight of other sugar alcohols. The disaccharide sugar alcohols may be selected from the group comprising isomalt, lactitol, maltitol or any mixtures thereof, and preferably comprise isomalt and/or lactitol.

Preferably, isomalt is present in an excess amount in the glazing composition used. With present in an "excess amount" is herein meant that more than 50% by weight of the composition consists of isomalt, and preferably more than 60% by weight, and more preferred more than 70% by weigh, and even more preferred more than 80% by weight, and most preferred more than 90% by weight.

In an example, the glazing composition used mainly consists of the sugar alcohols isomalt and lactitol. Preferably, said sugar alcohols isomalt and lactitol are present in a ratio comprised between 10:1 and 1:10.

In another example, the glazing composition used mainly consists of the sugar alcohols isomalt and maltitol. Preferably, said sugar alcohols isomalt and maltitol are present in a ratio comprised between 10:1 and 1:10.

In another example, the glazing composition used mainly consists of the sugar alcohols lactitol and maltitol. Preferably, said sugar alcohols lactitol and maltitol are present in a ratio comprised between 10:1 and 1.10.

In yet another example, the glazing composition used mainly consists of the sugar alcohols lactitol, maltitol and isomalt, for instance in a ratio going from 10:1:1 to 1:10:1 to 1:1:10.

The specification provides for using a glazing composition wherein the amount of sugar alcohol(s) corresponds to 0.01 to 0.10 gram of sugar alcohol(s) per cm² surface of dough product to be coated. In an example the specification provides for using a glazing composition wherein the amount of sugar alcohol(s) corresponds to 0.02 to 0.05 gram of sugar alcohol(s) per cm² surface of dough product to be coated. For instance, the sugar alcohol may be applied on a dough product in an amount of 0.03 to 0.06 gram per cm², irrespective of the form of the product. The insufficient or irregular use of sugar alcohol results in a product which has no, or at least no uniform brilliance. Also, when too much sugar alcohol is used, the problem occurs that the dough present under the glazing composition is not sufficiently baked. When too much humidity is present in such product, the product will become soft during cooling and will collapse.

The glazing composition used is in the form of a powder or granules, with a granule size comprised between 50 and 2000 µm, and preferably comprised between 500 and 2000 µm and even more preferred comprised between 750 and 2000 µm. Preferably, the sugar alcohols are applied in crystalline form. An important advantage of the applied sugar alcohols is that in a humid production environment, the sugar alcohols are not hygroscopic, and can be easily applied industrially using industrial spraying devices with automatic return system. The sugar alcohols keep their crystalline form.

The specification also relates to the use of a glazing composition which further comprises one or more mono, di-, oligo-, and/or polysaccharides, or any mixtures thereof. The glazing composition used may comprise in addition to the sugar alcohols monosaccharides such as fructose, dextrose, glucose and galactose, disaccharides such as sucrose, lactose and maltose, cyclic oligosaccharides such as cyclodextrin and cyclofructin and polysaccharides such as polydextrose. The amount of mono, di-, oligo-, and/or polysaccharides in the glazing composition is preferably lower than 50% by weight, preferably lower than 40% by weight, more preferably lower than 30% by weight, even more preferred lower than 20% by weight and most preferably lower than 10% by weight. Such percentages refer to the dry weight of the composition.

The present specification also describes the use of a glazing composition according to claim 1 and further comprising a decorative composition comprising one or more decorative ingredients. A variety of such decorative ingredients may be added to enhance the appearance or taste of the final baked product, such ingredients may include but are not limited to decorative ingredients such as *fruit* including dried fruit such as raisins, sultanas and apple; fresh fruits such as orange, pear and apple, freeze-dried fruit such as raspberries, *nuts* such as hazelnuts, pecan nuts and almonds, chopped nuts, sliced nuts, *herbs* such as basil or rosemary, *spices* such as cinnamon or nutmeg, *flavoring ingredients* such as chocolate or toffee, *coloring ingredients* such as eggs, or *preservatives*, or any mixtures thereof. These ingredients may be applied to the surface of the unbaked dough mixture either before or after the application of the glazing composition, or may be mixed with the glazing composition such that the different components are applied simultaneously. The amount of other ingredients as indicated above in the glazing composition is variable.

The specification also relates to a pre-glazed dough product comprising a non-sticky layer of a glazing composition according claim 3.

With the term "*dough product*" is meant a product made based on dough. The term, as used herein refers to a mixture that consists primarily of a liquid (usually water or milk), flour, and optionally a leavening agent, to which other ingredients (butter, margarine, seasonings or sweeteners) are often added before it is baked to produce a food product. The term "*dough*" is not to be construed as limited in any way, and may refer to any kind of dough, including Danish or puff pastry dough, viennoiserie dough, biscuit dough, bread dough, sandwich bread dough, multi-grain dough, pizza dough, doughnut dough, tarts, brownie dough, muffin dough, or the like.

The term *"pre-glazed dough product"* as used herein refers to a dough product as defined herein, the surface of which has been coated with a glazing composition.

The pre-glazed dough product comprises between 0.01 and 0.10 gram of sugar alcohol(s) per cm² surface of dough product, and preferably between 0.02 and 0.05 or between 0.03 and 0.06 gram of sugar alcohol(s) per cm² surface of dough product.

The pre-glazed dough product may include an unbaked (prior-to-baking) dough or a pre-baked dough, which need further baking for resulting in a consumable baked product. The glazing composition may be applied either prior to or after pre-baking. Also disclosed herein is a prior-to-baking or pre-baked dough which may be frozen at the point of manufacture and further finally baked in order to obtain a baked product at the point of sale. In this situation, the point of manufacture and the point of sale may be same or may be different.

The pre-glazed dough product may also include a prior-to-proving dough or a pre-proved dough .The glazing composition may be applied either after or prior to proving.

The specification also relates to a pre-glazed dough product comprising a non-sticky layer of a glazing composition according to claim 3 and a layer of a decorative composition comprising decorative ingredients. The decorative ingredients may be ingredients as defined herein. Preferably the layer of the glazing composition is present on top of the layer of decorative composition in said dough product. Preferably, the ratio of glazing composition and the decorative composition on said dough product is comprised between 5:1 and 1:5, and preferably comprised between 2:1 and 1:2.

A "*baked product*" as used herein refers to a product which is produced by baking a dough product. By the term baked product is meant any product formed by baking a dough, typically Danish pastries, puff pastries, viennoiserie, breads, cakes, cookies, biscuits, muffins, brownies, doughnuts, tarts ; however, it also applies to savory products such as savory croissants or savory puff pastry products, or to other types of products including pizza bread, empanada bread, or the like.

The specification also provides a packing comprising one or more pre-glazed dough products according to the present specification. The packing may be any kind of material, including but not limited to plastic film or foil, paper, carton, or the like. Advantageously several pre-glazed dough products may be packed together in a single packing without sticking to each other or to the packaging. In addition, this permits to reduce the amount of packaging material to be used, and the costs related thereto.

The specification also relates to a method for preparing a pre-glazed dough product, according to claim 7.

The obtained pre-glazed dough products may be further packed for further transport and handling.

It is further noted that the dough product may be wetted before being coated with a glazing composition. The pre-glazed dough product may be further wetted after the glazing coating step. The applicant has shown that a wet dough surface is highly preferred as it greatly improves the adhesion of a glazing composition on the surface of the dough product. If required, spraying extra water "upon" the glazing composition may be applied to adhere bigger amounts of glazing sugars than the amount corresponding to a uniform covering of the surface. The present method thus permits to provide a pre-glazed dough product showing optimal adhesion of the glazing composition on the dough surface of dough products and optimal *non-stickiness* of the outer surface of the glazing composition for further handling. In addition, the applicant has shown that by applying the present method, a controlled amount of sugar alcohol crystals remains stuck to the frozen dough pieces, such that a product is obtained showing a more uniform spreading of the composition on the surface of the product.

The glazing composition is preferably applied directly onto a dough product, and preferably on the wetted dough product.

In an example the method comprises proving the dough product prior to coating with said glazing compositionor proving the coated dough product prior to freezing.

In an example the method comprises pre-baking the coated dough product prior to freezing.

In another example, the method comprises pre-baking the dough product prior to coating with said glazing composition.

The present specification further describes a method for preparing a pre-glazed dough product which is further provided with a decorative layer, i.e. a layer which consists of a decorative composition comprising one or more decorative ingredients, preferably selected from the group comprising herbs, flavoring compounds, nuts, fruits, coloring ingredients, preservatives, or any mixtures thereof as defined herein, and preferably comprising nuts and flavoring/coloring agents such as e.g. eggs.

Thus, the specification also describes a method comprising the further step of coating the dough product with said decorative composition prior to coating the dough with a glazing composition as defined herein. Moreover, the present method preferably further comprises the step of wetting the dough product which has been coated with said decorative composition prior to coating said dough with said glazing composition. The applicant has shown that a wet decorative layer on the dough surface is highly preferred as it greatly improves the adhesion of a glazing composition on the surface of the decorative layer. Preferably, the method thus comprises the application of a glazing composition as defined in claim 7 on top of the decorative composition, preferably on top of a wetted decorative composition. Preferably, the glazing composition and the decorative composition are applied as to be present on the obtained dough product in a ratio of glazing composition to decorative composition which is comprised between 5:1 and 1:5, and preferably comprised between 2:1 and 1:2. Advantageously, such method permits to obtain dough products showing a shiny decorative layer, e.g. shiny nuts or other ingredients (see also example 9).

In an example, the sugar alcohol, e.g. lactitol is applied in crystalline form. An important advantage of the applied sugar alcohols is that in a humid production environment, the sugar alcohol, e.g. lactitol is not hygroscopic, and can be easily applied industrially using industrial sprinkling devices with automatic return system. The sugar alcohol keeps its crystalline form. In an example, products, which may be pre-proven, are provided with egg or an egg substitute. When a decorative composition (nuts, seeds, chocolate products, etc...) is applied on the products, the products are preferably first sprinkled with water. After wetting, care Is taken that no fluid, such as egg, egg substitute or water, is carried on in the further process. The sugar alcohol is subsequently applied on the products, e.g. in an amount of 0.3 to 0.6 mg/mm² (30-60 mg/cm²) per product, irrespective of the form of the product. In a next step, the products are frozen, e.g. in a freezing installation using forced air speed. When too much sugar alcohol is applied or insufficient wetting agent (egg, water) used to stick the sugar alcohol to the product, the product will be blown away during freezing. The frozen product is not sticky and can be easily packed by hand or automatically, hand-packed. During packing, because of the non hygroscopic properties of the sugar alcohol, no further protection (e.g. cloths, gloves) is necessary for staff during manual packing. During automatic packing, the product remains dry. In contract, when the product is hygroscopic a very sticky syrup is obtained such that during packing the products may stick to the packing device and obstruct the packing process.

It is important for a consumer, when the cold chain of product preparation has not been interrupted, that when manipulation the frozen products, these products are not sticky. In accordance with the present invention, a customer can easily take the products from a packing: the products do not stick to each other, and a customer can easily arrange the frozen products on a baking plate without ending up with a sticky paste on hand and fingers. In addition, dough products according to the present invention may be backed in an oven, preferably an oven to which no extra humidity or damp is added. After backing, the baked product may be stored in a preferably well-ventilated room.

### Examples

### Example 1

Examples of glazing compositions are represented in **Table 1**.

**Table 1 Glazing compositions with or without sugars in combination or not with one or more decorative ingredients**

| **glazing composition** | | **decorative ingredients** |
|---|---|---|
| **sugar alcohols** | **other sugars** | |
| lactitol | - | - |
| maltitol | - | - |
| isomalt | - | - |
| erythritol | - | - |
| lactitol, maltitol | - | - |
| erythritol, lactitol | - | - |
| erythritol, maltitol | - | - |
| lactitol, isomalt | - | - |
| maltitol, isomalt, | - | - |
| isomalt, lactitol, maltitol | - | - |
| lactitol | - | Nuts and chocolate drops |
| maltitol | - | apple and peer |
| isomalt | - | cinnamon |
| erythritol | - | Almonds |
| lactitol, maltitol | - | Chocolate |
| erythritol, lactitol | - | Hazelnuts |
| erythritol, maltitol | - | toffee |
| lactitol, isomalt | - | dried raisins |
| maltitol, isomalt, | - | pecan nuts |
| isomalt, lactitol, maltitol | - | sugar crystals |
| lactitol | glycose syrup | - |
| maltitol | fructose and glucose | - |
| isomalt | maltose | - |
| isomalt | polydextrose | |
| erythritol | glucose and sucrose | - |
| lactitol, maltitol | glycose syrup | - |
| erythritol, lactitol | cyclodextrin | - |
| erythritol, maltitol | glucose syrup and dextrose | - |
| lactitol, isomalt | dextrose | - |
| maltitol, isomalt | lactose | - |
| isomalt, lactitol, maltitol | glycose syrup | |
| lactitol | glycose syrup | Nuts and chocolate drops |
| maltitol | fructose and glucose | apple and peer |
| isomalt | maltose | cinnamon |
| isomalt | polydextrose | Chocolate |
| erythritol | glucose and sucrose | Almonds |
| lactitol, maltitol | glycose syrup | Chocolate |
| erythritol, lactitol | cyclodextrin | Hazelnuts |
| erythritol, maltitol | glucose syrup and dextrose | toffee |
| lactitol, isomalt | dextrose | dried raisins |
| maltitol, isomalt | lactose | pecan nuts |
| isomalt, lactitol, maltitol | glycose syrup | sugar crystals |

### Example 2

Schematic representations of examples of methods for preparing a pre-glazed dough product are represented in **Table 2.** In table 2, possible further steps for handling the obtained pre-glazed dough product are also indicated.

**Table 2**

| **example** | **I** | **II** | **III** | **IV** | **V** | **VI** |
|---|---|---|---|---|---|---|
| **steps in preparation of pre-glazed dough product** | Preparing dough product | Preparing dough product | Preparing dough product | Preparing dough product | Preparing dough product | Preparing dough product |
| | - | proving | - | proving | proving | optionally proving |
| | - | - | - | glazing | baking | glazing |
| | glazing | glazing | glazing | baking | glazing | baking |
| | freezing | freezing | freezing | freezing | freezing | freezing |
| **obtained product** | prior-to-baking pre-glazed dough product | prior-to-baking pre-proved pre-glazed dough product | prior-to-baking prior-to-proving pre-glazed dough product | pre-baked pre-proved pre-glazed dough product | pre-basked pre-proved pre-glazed dough product | fully baked proved glazed dough product |
| **further handling** | thawing | thawing | thawing | thawing | thawing | thawing |
| | - | - | proving | - | - | - |
| | baking | baking | baking | baking | baking | - |

### Example 3

In this example, a glazing composition was applied on a pre-proved dough product, which was subsequently immediately frozen. The dough products comprised dough for chocolate rolls. **Table 3** represents the properties of the glazing compositions and of the dough products after thawing of the frozen products, and the properties of the baked products, after baking with steam.

**Table 3**

| **glazing composition** | **properties of the dough product after thawing** | **properties of the baked product after baking with steam** |
|---|---|---|
| lactitol MC⁽¹⁾ powder | remains in granular form, although some small, non-sticky watery spots | shiny, crispy crust |
| lactitol MC powder applied as sprayed water / powder / sprayed water | remains in granular form | shiny |
| maltitol powder P90 ⁽²⁾ | remains in granular form | shiny |
| maltitol powder P90 applied as sprayed water / powder / sprayed water | partly in granular form, partly watery but not sticky | shiny |

| | | |
|---|---|---|
| ⁽¹⁾ Lactitol MC refers to lactitol monohydrate crystalline purchased from Danisco ⁽²⁾ Maltitol P90 was purchased from Roquette | | |

The present example illustrates that glazing compositions based on lactitol and maltitol provided as powder give no sticky products before baking and provide baked product having a shiny appearance.

### Example 4

In this example, glazing compositions consisting of sugar alcohols were compared to prior glazing compositions including glazing compositions comprising mono-, di-, and/or polysaccharides or a Florentinermix. The glazing compositions were applied on a pre-proved dough product, which was subsequently immediately frozen. The glazing compositions were applied according to the procedure of spraying water/strewing glazing/ spraying water (water/powder/water). The dough products comprised dough for chocolate rolls or for cinnamon whirls. **Table 4** represents the properties of the glazing compositions and of the dough products after thawing of the frozen products, and the properties of the baked products.

**Table 4**

| **glazing composition** | **properties of the dough product after thawing** |
|---|---|
| Lactitol MC | not sticky, glazing composition remains in granular form |
| Florentinermix⁽³⁾ | sticky, remains in powder form |
| polydextrose | sticky, drips down on the baking plate |
| 2 % sorbitol | sticky, drips down on the baking plate |
| 4 % glucose | |
| 92 % polydextrose | |
| 4 % lactose | sticky, drips down on the baking plate |
| 96 % polydextrose | |

| | |
|---|---|
| ⁽¹⁾ Lactitol MC refers to lactitol monohydrate crystalline purchased from Danisco ⁽³⁾ Florentinermix comprises as ingredients sugar, glucose syrup, vegetable oil/ hardened, emulsifier lecithin, skimmed mik, cream, and flavor and was purchased from Unifine. | |

In another experiment, the same glazing compositions were applied according to the procedure of spraying water/strewing glazing for preparing chocolate rolls. Similar results were obtained as when applied as water/powder/water.

From these experiments it can be concluded that the use of a glazing composition based on mono-, di-, and/or polysaccharides or on a Florentinermix gives sticky dough products before baking and shiny baked products after baking. Glazing compositions based on the sugar alcohol lactitol give no sticky dough products before baking, and in addition provide baked products having a shiny aspect after baking. Similar results were obtained for different dough types (cinnamon whirls and chocolate rolls). Also, the observed results were similar when the glazing composition was applied by (1) spraying water/strewing glazing or when applied by (2) spraying water/strewing glazing/ spraying water.

Use of a Florentinermix has the disadvantage that the dough obtained an extra (undesired) color, and might necessitate an adaptation of the baking procedure. Such extra coloring of the baked product was not observed when using a glazing composition based on sugar alcohol lactitol.

### Example 5

This example illustrates the coating of a dough product for chocolate rolls with different amounts of a glazing composition consisting of the sugar alcohol lactitol. The glazing powder composition is strewed on the dough product after fermentation (proving), before freezing. The glazing compositions were applied according to the procedure of spraying water on the dough product, strewing glazing on the product, spraying water on top of the product. After application of the composition, the product was frozen. **Table 5** represents the properties of the baked products.

**Table 5**

| **weight Lactitol MC (Danisco) per surface dough product (*) (g/cm²)** | **chocolate rolls** |
|---|---|
| 0,016 | shiny, no drips on baking plate |
| 0,032 | shiny, no drips on baking plate |
| 0,049 | shiny, no drips on baking plate |
| 0,065 | shiny, drips on baking plate |
| 0,081 | shiny, drips on baking plate |

| | |
|---|---|
| (*) The surface of the chocolate roll dough product comprised 62 cm². | |

From this experiment it can be concluded that the tested weight/ surface ratio's of the glazing composition provide baked products with a shiny aspect. Drips of glazing composition become visible on the baking plate as from using more than 0.050g lactitol MC (Danisco) per cm² dough product.

### Example 6

**Table 6** illustrates the performance of different polyols used as a glazing composition on pre-proved frozen chocolate rolls. The compositions (glazing powders) were strewed on the dough product after fermentation (proving) and before freezing. The glazing compositions were applied according to the procedure of spraying water on the dough product, followed by strewing glazing on the product. To check the stickiness of the obtained pre-glazed dough products, two chocolate rolls were put on top of each other, top on top, and it was checked after 1 hour if they stacked to each other.

**Table 6**

| **glazing composition (*)** | **Stickiness pre-glazed dough product** | **properties baked product** |
|---|---|---|
| Lactitol MC (Danisco) | products do not stick to each other | shiny, crispy almost no drips on baking plate |
| Maltitol P90 (Roquette) | products stick very slightly to each other | shiny |
| Maltitol P200 (Roquette) | products do not stick to each other | shiny |
| Polydextrose (Sta-Lite III polydextrose - Tate & Lyle) | products stick to each other | shiny, crispy drips on baking plate |

| | | |
|---|---|---|
| (*) all sugar alcohols or sugars are provided in powder form | | |

From this experiment it can be concluded that the use of a glazing composition based on polysaccharide (polydextrose) gives sticky dough products before baking and shiny baked products after baking. Glazing compositions based on the sugar alcohol lactitol or maltitol give no sticky, or only slightly sticky dough products before baking, and in addition provide baked products having a shiny aspect after baking. The use of maltitol powder with a coarser granulometry (Maltitol P200) is advantgeous to prevent stickiness.

### Example 7

**Table 7** illustrates the performance of different polyols used as a glazing composition on pre-proved frozen chocolate rolls. The compositions (glazing powders) were strewed on the dough product after fermentation (proving) and before freezing. The glazing compositions were applied according to the procedure of spraying water on the dough product, followed by strewing glazing on the product, following by spraying water on the product. After application of the composition, the product was frozen. To check the stickiness of the obtained pre-glazed dough products, two chocolate rolls were put on top of each other, top on top, and it was checked after 1 hour if they stuck to each other.

**Table 7**

| **glazing composition (*)** | **Stickiness pre-glazed dough product** | **properties baked product** | **Appearance baked product** |
|---|---|---|---|
| **isomalt ⁽⁴⁾** | products do not stick to each other | shiny crust, very crispy uniform shine | **** |
| **lactitol monohydrate** | products do not stick to each other | shiny crust, crispy uniform shine | *** |
| **maltitol** | products do not stick to each other | crispy, shiny | ** |

| | | | |
|---|---|---|---|
| (*) all sugar alcohols are provided in powder form ⁽⁴⁾ Isomalt corresponds to "Isomaltidex 16503" purchased from Cargill | | | |

From this experiment it can be concluded that the use of a glazing composition based on a disaccharide sugar alcohol gives no sticky dough products before baking, and in addition provides baked products having a shiny aspect after baking. In addition, use of the sugar alcohols lactitol and isomalt provides baked product having a uniform shiny aspect.

### Example 8

This example illustrates the performance of different polyols used as a glazing composition in combination with sugars on pre-proved frozen chocolate rolls. The glazing compositions were applied according to the procedure of spraying water on the dough product, followed by strewing glazing on the product, following by spraying water on the product. After application of the composition, the product was frozen. To check the stickiness of the obtained pre-glazed dough products, two chocolate rolls were put on top of each other, top on top, and it was checked after 1 hour if they stuck to each other. Results of this experiment are shown in **table 8.**

**Table 8**

| **glazing composition (*)** | **ratio** | **properties dough product 15 minutes after thawing** | **Stickiness pre-glazed dough product** | **properties baked product** |
|---|---|---|---|---|
| **Polydextrose / lactitol** | **10/90** | not sticky, but slightly wet | products do not stick to each other | shiny |
| **Polydextrose / lactitol** | **30/70** | slightly sticky | products slightly stick to each other | shiny |
| **Polydextrose / lactitol** | **50/ 50** | sticky | products slightly stick to each other | shiny |
| **Polydextrose / lactitol** | **70/30** | very sticky | products stick to each other | shiny |
| **Polydextrose / lactitol** | **90/10** | extremely sticky | products stick to each other | shiny, crust seems to become more rapidly soft |
| **Florentinermix / lactitol** | **10/90** | not sticky, but slightly wet | products do not stick to each other | shiny |
| **Florentinermix / lactitol** | **30/70** | slightly sticky | products slightly stick to each other | shiny, but not as crispy |
| **Florentinermix / lactitol** | **50/ 50** | sticky | products slightly stick to each other | shiny, but not as crispy |
| **Florentinermix / lactitol** | **70/30** | very sticky | products stick to each other | shiny with some mat surfaces, more crispy |
| **Florentinermix / lactitol** | **90/10** | extremely sticky | products stick to each other | shiny with some mat surfaces, more crispy |

| | | | | |
|---|---|---|---|---|
| (*) all sugar alcohols and sugars are provided in powder form | | | | |

From this experiment it can be concluded that polyols can be combined with non-polyol sugars up to a concentration of maximum 50 % (by weight); and preferably 30% (by weight) of non-polyols without having a negative impact on A) the stickiness of dough products before baking, and B) the shiny aspect of the obtained baked products.

### Example 9

**Table 9** illustrates the performance of a glazing composition based on lactitol in combination with decorative ingredients (egg, nuts). Four different application orders (1 to 4) were tested.

**Table 9**

| | **wet phase / glazing composition /decorative ingredients** | **properties baked product** |
|---|---|---|
| 1 | egg / lactitol / water / nuts | crust is shiny, nuts are not shiny |
| 2 | egg / nuts / lactitol | crust and nuts are shiny |
| 3 | egg / nuts / water / lactitol | crust and nuts are shiny |
| 4 | lactitol / egg / nuts | crust is shiny, nuts are not shiny |

From this experiment it can be concluded that polyols can be applied in combination with decorative ingredients (nuts, chocolate drops, etc...). Preferably, the glazing composition is applied on top of the ingredients (see order 2 and 3).

### Example 10

This example illustrates
(A) the performance of different polyols used as a glazing composition on fully baked frozen products (see table 2, column IV), and
(B) the effect of re-warming on the performance of different polyols used as a glazing composition
   (A) A glazing composition based on lactitol or isomalt was applied on a proved dough product, which was subsequently, baked and frozen. After thawing the baked product could be readily consumed. The applicant showed that the crust of fully baked frozen product remained crispier in the case polyols were used as a glazing agent.
   (B) In a first experiment, fully baked frozen product, obtained as described in (A), were re-warmed for a short time (2 min 180°C), after which the re-warmed fully baked frozen product could be consumed. The applicant showed that such fully baked products glazed with a glazing composition based on lactitol or isomalt could be re-warmed for a short time without loss of the shiny aspect of the crust.

In a second experiment, pre-proved frozen products were obtained as described in table 2, column II. After thawing the product was baked, stored at ambient temperature for up to 8 hours, and re-warmed for a short time (2 min at 180°C) after which the re-warmed product could be consumed. The applicant showed that products made with a glazing composition based on lactitol or isomalt could be re-warmed for a short time (2 min at 180°C) without loss of the shiny aspect of the crust.

### Example 11

In the following **table 10** combined compositions are illustrated comprising a glazing composition and a decorative composition, which are applied on a chocolate roll (having a surface of ca 60 cm²). The glazing composition mainly consisted of the sugar alcohol lactitol monohydrate. Table 10 further indicates the weight (in g) of the sugar alcohol and the decorative ingredients on the obtained dough product.

**Table 10**

| **GLAZING composition** | | **DECORATIVE composition** | |
|---|---|---|---|
| Lactitol monohydrate | 2 g | almond flakes | 3 g |
| | 3 g | bits of hazelnuts | 3 g |
| | 4 g | chocolate drops | 2 g |
| | | pecan nuts | 4 g |
| | | sugar crystals | 2 g |
| | | grounded coffee | 1 g |

### Example 12

In this example the adhesion of a glazing composition applied on a dough product that had been coated or not with a layer of decorative ingredients was evaluated. The glazing composition and the decorative composition were applied after the fermentation step and before freezing of the products.

It can be concluded that a wet dough surface is highly preferred for a good adhesion of the present glazing composition on the dough product.

Also, in the case that an extra decoration composition is applied on the product, it is preferred to apply the glazing on top of the other decoration in other to have shiny nuts, slices, etc... It is further preferred to spray water on the decoration before applying the glazing hereon, in order to have good adhesion of glazing on the decoration layer.

### Example 13

This example illustrates the impact of granulometry of disaccharide polyols on performance of a glazing composition.

Compositions comprising isomalt of coarse and fine granulometry, lactitol of coarse granulometry, and maltitol P90 and P200 in fine granulometry were tested.

Egg was sprayed on a pre-proved product, sugar alcohol powder was sprinkled on the dough product; no water was sprayed on top of the glazing. The product was then frozen.

From this experiment, it could be concluded that the performance of the difference sugar alcohols was dependent on the amount of egg sprayed on the product.

In conclusion, these examples illustrate that the use of a glazing composition based on a disaccharide sugar alcohol permits to avoid sticky dough products, which obtain a highly desired shiny surface after baking. In addition, the lower the hygroscopicity of the used disaccharide polyols, the better the non-stickiness performance (when comparing sugar alcohols of a same granulometry). Moreover, it was shown that sugar alcohols with a coarser granulometry of preferably between 500 µm and 2000 µm give better results, are more tolerant to use, than those with a finer granulometry of below 500 µm.

## Claims

1. Use of a composition comprising at least 50% by weight, preferably at least 70 % by weight, and more preferably more than 90% by weight of a disaccharide sugar alcohol selected from the group consisting of lactitol, isomalt, maltitol or any mixtures thereof for glazing the outer surface of a pre-baked or prior-to-baking dough product, wherein the amount of said sugar alcohol corresponds to between 0.01 and 0.10 gram of sugar alcohol per cm² surface of dough product, wherein the sugar alcohol(s) have a granule size comprised between 50 and 2000 µm, and wherein said composition is in the form of a powder or granules.

2. Use according to claim 1, wherein said composition is used before freezing said dough product.

3. Pre-glazed dough product comprising a non-sticky layer of a glazing composition comprising of at least 50% by weight, preferably at least 70 % by weight, and more preferably more than 90% by weight of a disaccharide sugar alcohol selected from the group consisting of lactitol, isomalt, maltitol or any mixtures thereof, wherein said composition is in the form of a powder or granules and comprises between 0.01 and 0.10 gram of sugar alcohol(s) per cm² surface of dough product, and wherein the sugar alcohol(s) have a granule size comprised between 50 and 2000 µm.

4. Pre-glazed dough product according to claim 3, further comprising a layer of a decorative composition comprising one or more decorative ingredients selected from the group comprising herbs, flavoring compounds, nuts, fruits, coloring ingredients, preservatives or any mixtures thereof.

5. Pre-glazed dough product according to claims 3 or 4, wherein the ratio of glazing composition to decorative composition on the dough product is comprised between 5:1 and 1:5.

6. A packing comprising one or more pre-glazed dough products according to any of claims 3 to 5, 16-20.

7. Method for preparing a pre-glazed dough product comprising the steps of:
a) preparing a dough product,
b) coating an outer surface of said dough product with a glazing compositioncomprising at least 50% by weight, preferably at least 70 % by weight, and more preferably more than 90% by weight of a disaccharide sugar alcohol selected from the group consisting of lactitol, isomalt, maltitol or any mixtures thereof, wherein said composition is in the form of a powder or granules and comprises between 0.01 and 0.10 gram of sugar alcohol(s) per cm² surface of dough product, and wherein the sugar alcohol(s) have a granule size comprised between 50 and 2000 µm, and
c) freezing the dough product obtained in step b).

8. Method according to claim 7, comprising wetting the dough product obtained in step a) prior to coating with said glazing composition.

9. Method according to claims 7 or 8, comprising proving the dough product prior to coating the product with said glazing composition.

10. Method according to any one of claims 7 to 9, comprising proving the coated dough product prior to freezing.

11. Method according to any one of claims 7 to 10, comprising pre-baking the coated dough product prior to freezing.

12. Method according to any one of claims 7 to 10, comprising pre-baking the dough product prior to coating with said glazing composition.

13. Method according to any of claims 7 to 12, comprising the further step of coating the dough product with a decorative composition comprising one or more decorative ingredients selected from the group comprising herbs, flavoring compounds, nuts, fruits, coloring ingredients, preservatives, or any mixtures thereof, prior to coating said dough product with said glazing composition.

14. Method according to claim 13, comprising the further step of wetting the dough product coated with said decorative composition prior to coating said dough product with said glazing composition.

15. Method according to any of claims 7 to 14, further comprising the step of packing one or more of said frozen dough products in a packing.

16. Use according to any of claims 1 or 2, pre-glazed dough product according to any of claims 3 to 5, or method according to any of claims 7 to 15, wherein said composition comprises 50 to 100% by weight of said disaccharide sugar alcohol, and 0 to 50% by weight of other sugar alcohols.

17. Use according to any of claims 1, 2, or 16, pre-glazed dough product according to any of claims 3 to 5, or 16, or method according to any of claims 7 to 15, or 16, wherein isomalt is present in an excess amount in said composition.

18. Use according to any of claims 1, 2, 16, or 17, pre-glazed dough product according to any of claims 3 to 5, 16, or 17 or method according to any of claims 7 to 15, 16, or 17, wherein said sugar alcohols consist of lactitol and isomalt which are present in a ratio comprised between 10:1 and 1:10.

19. Use according to any of claims 1, 2, or 16-18, pre-glazed dough product according to any of claims 3 to 5, or 16-18, or method according to any of claims 7 to 15, or 16-18, wherein said composition further comprises a monosaccharide, a disaccharide, an oligosaccharide, or a polysaccharide, or any mixtures thereof.

20. Use according to any of claims 1, 2, or 16-19, pre-glazed dough product according to any of claims 3 to 5, or 16-19, or method according to any of claims 7 to 15, or 16-18, wherein the sugar alcohol(s) are provided in granular form having granule sizes comprised between 750 and 2000 µm.

21. Use according to any of claims 1, 2, or 16-20, wherein the composition further comprises a decorative composition comprising one or more decorative ingredients selected from the group comprising herbs, flavoring compounds, nuts, fruits, coloring ingredients, preservatives or any mixtures thereof.

## Patentansprüche

1. Verwendung einer Zusammensetzung umfassend wenigstens 50 Gew.-%, vorzugsweise wenigstens 70 Gew.-% und bevorzugter mehr als 90 Gew.-% an einem Disaccharid-Zuckeralkohol ausgewählt aus der Gruppe bestehend aus Lactit, Isomalt, Maltit und beliebigen Gemischen davon zum Glasieren der äußeren Oberfläche eines vorgebackenen oder ungebackenen Teigprodukts, wobei die Menge an dem Zuckeralkohol zwischen 0,01 und 0,10 Gramm Zuckeralkohol pro cm² Oberfläche des Teigprodukts entspricht, wobei der Zuckeralkohole/die Zuckeralkohole eine Korngröße zwischen 50 und 2000 µm aufweist/aufweisen und wobei die Zusammensetzung in der Form eines Pulvers oder Granulats vorliegt.

2. Verwendung gemäß Anspruch 1, wobei die Zusammensetzung vor dem Einfrieren des Teigprodukts verwendet wird.

3. Vorglasiertes Teigprodukt umfassend eine nichtklebrige Schicht einer Glasurzusammensetzung umfassend wenigstens 50 Gew.-%, vorzugsweise wenigstens 70 Gew.-% und bevorzugter mehr als 90 Gew.-% an einem Disaccharid-Zuckeralkohol ausgewählt aus der Gruppe bestehend aus Lactit, Isomalt, Maltit und beliebigen Gemischen davon, wobei die Zusammensetzung in der Form eines Pulvers oder Granulats vorliegt und zwischen 0,01 und 0,10 Gramm an Zuckeralkohol(en) pro cm² Oberfläche des Teigprodukts umfasst und wobei der Zuckeralkohole/die Zuckeralkohole eine Korngröße zwischen 50 und 2000 µm aufweist/aufweisen.

4. Vorglasiertes Teigprodukt gemäß Anspruch 3, ferner umfassend eine Schicht einer Dekorationszusammensetzung umfassend einen oder mehrere dekorative Inhaltsstoffe ausgewählt aus der Gruppe umfassend Kräuter, Aromaverbindungen, Nüsse, Früchte, farbgebende Inhaltsstoffe, Konservierungsmittel und beliebige Gemische davon.

5. Vorglasiertes Teigprodukt gemäß Ansprüchen 3 oder 4, wobei das Verhältnis von Glasurzusammensetzung zu Dekorationszusammensetzung auf dem Teigprodukt zwischen 5:1 und 1:5 beträgt.

6. Verpackung, umfassend ein oder mehrere vorglasierte Teigprodukte gemäß einem der Ansprüche 3 bis 5, 16-20.

7. Verfahren zum Herstellen eines vorglasierten Teigprodukts umfassend die Schritte:
a) Herstellen eines Teigprodukts,
b) Überziehen einer äußeren Oberfläche des Teigprodukts mit einer Glasurzusammensetzung umfassend wenigstens 50 Gew.-%, vorzugsweise wenigstens 70 Gew.-% und bevorzugter mehr als 90 Gew.-% an einem Disaccharid-Zuckeralkohol ausgewählt aus der Gruppe bestehend aus Lactit, Isomalt, Maltit und beliebigen Gemischen davon, wobei die Zusammensetzung in der Form eines Pulvers oder Granulats vorliegt und zwischen 0,01 und 0,10 Gramm an Zuckeralkohol(en) pro cm² Oberfläche des Teigprodukts umfasst und wobei der Zuckeralkohole/die Zuckeralkohole eine Korngröße zwischen 50 und 2000 µm aufweist/aufweisen, und
c) Einfrieren des in Schritt b) erhaltenen Teigprodukts.

8. Verfahren gemäß Anspruch 7, umfassend Befeuchten des in Schritt a) erhaltenen Teigprodukts vor dem Überziehen mit der Glasurzusammensetzung.

9. Verfahren gemäß Ansprüchen 7 oder 8, umfassend gehen lassen des Teigprodukts vor dem Überziehen des Produkts mit der Glasurzusammensezung.

10. Verfahren gemäß einem der Ansprüche 7 bis 9, umfassend gehen lassen des überzogenen Teigprodukts vor dem Einfrieren.

11. Verfahren gemäß einem der Ansprüche 7 bis 10, umfassend Vorbacken des überzogenen Teigprodukts vor dem Einfrieren.

12. Verfahren gemäß einem der Ansprüche 7 bis 10, umfassend Vorbacken des überzogenen Teigprodukts vor dem Überziehen mit der Glasurzusammensetzung.

13. Verfahren gemäß einem der Ansprüche 7 bis 12, umfassend den weiteren Schritt des Überziehens des Teigprodukts mit einer Dekorationszusammensetzung umfassend einen oder mehrere dekorative Inhaltsstoffe ausgewählt aus der Gruppe umfassend Kräuter, Aromaverbindungen, Nüsse, Früchte, farbgebende Inhaltsstoffe, Konservierungsmittel und beliebige Gemische davon, vor dem Überziehen des Teigprodukts mit der Glasurzusammensetzung.

14. Verfahren gemäß Anspruch 13, umfassend den weiteren Schritt des Befeuchtens des Teigprodukts, das mit der Dekorationszusammensetzung überzogen ist, vor dem Überziehen des Teigprodukts mit der Glasurzusammensetzung.

15. Verfahren gemäß einem der Ansprüche 7 bis 14, ferner umfassend den Schritt des Verpackens eines oder mehrerer der eingefrorenen Teigprodukte in einer Verpackung.

16. Verwendung gemäß einem der Ansprüche 1 oder 2, vorglasiertes Teigprodukt gemäß einem der Ansprüche 3 bis 5 oder Verfahren gemäß einem der Ansprüche 7 bis 15, wobei die Zusammensetzung 50 bis 100 Gew.-% an dem Disaccharid-Zuckeralkohol und 0 bis 50 Gew.-% an anderen Zuckeralkoholen umfasst.

17. Verwendung gemäß einem der Ansprüche 1, 2 oder 16, vorglasiertes Teigprodukt gemäß einem der Ansprüche 3 bis 5 oder 16 oder Verfahren gemäß einem der Ansprüche 7 bis 15 oder 16, wobei in der Zusammensetzung Isomalt in einer Überschussmenge enthalten ist.

18. Verwendung gemäß einem der Ansprüche 1, 2, 16 oder 17, vorglasiertes Teigprodukt gemäß einem der Ansprüche 3 bis 5, 16 oder 17 oder Verfahren gemäß einem der Ansprüche 7 bis 15, 16 oder 17, wobei die Zuckeralkohole aus Lactit und Isomalt bestehen, die in einem Verhältnis zwischen 10:1 und 1:10 vorliegen.

19. Verwendung gemäß einem der Ansprüche 1, 2 oder 16-18, vorglasiertes Teigprodukt gemäß einem der Ansprüche 3 bis 5 oder 16-18 oder Verfahren gemäß einem der Ansprüche 7 bis 15 oder 16-18, wobei die Zusammensetzung ferner ein Monosaccharid, ein Disaccharid, ein Oligosaccharid oder ein Polysaccharid oder ein beliebiges Gemisch davon umfasst.

20. Verwendung gemäß einem der Ansprüche 1, 2 oder 16-19, vorglasiertes Teigprodukt gemäß einem der Ansprüche 3 bis 5 oder 16-19 oder Verfahren gemäß einem der Ansprüche 7 bis 15 oder 16-18, wobei der Zuckeralkohol/die Zuckeralkohole in Granulatform mit Granulatgrößen zwischen 750 und 2000 µm bereitgestellt wird/werden.

21. Verwendung gemäß einem der Ansprüche 1, 2 oder 16-20, wobei die Zusammensetzung ferner eine Dekorationszusammensetzung umfasst, die einen oder mehrere dekorative Inhaltsstoffe ausgewählt aus der Gruppe umfassend Kräuter, Aromaverbindungen, Nüsse, Früchte, farbgebende Inhaltsstoffe, Konservierungsmittel und beliebige Gemische davon umfasst.

## Revendications

1. Utilisation d'une composition comprenant au moins 50% en poids, préférablement au moins 70% en poids, et plus préférablement plus de 90% en poids, d'un alcool de sucre disaccharidique choisi dans le groupe constitué par le lactitol, l'isomalt, le maltitol ou des mélanges quelconques de ceux-ci, pour le glaçage de la surface externe d'un produit de pâte précuit ou préalablement à la cuisson, dans laquelle la quantité dudit alcool de sucre correspond à de entre 0,01 et 0,10 gramme d'alcool de sucre par cm² de surface de produit de pâte, où le ou les alcools de sucre possèdent une taille de granulé comprise entre 50 et 2000 µm, et dans laquelle ladite composition se trouve sous la forme d'une poudre ou de granulés.

2. Utilisation selon la revendication 1, dans laquelle ladite composition est utilisée avant la congélation dudit produit de pâte.

3. Produit de pâte pré-glacé, comprenant une couche non collante d'une composition de glaçage comprenant au moins 50% en poids, préférablement au moins 70% en poids, et plus préférablement plus de 90% en poids, d'un alcool de sucre disaccharidique choisi dans le groupe constitué par le lactitol, l'isomalt, le maltitol ou des mélanges quelconques de ceux-ci, où ladite composition se trouve sous la forme d'une poudre ou de granulés et comprend entre 0,01 et 0,10 gramme d'alcool(s) de sucre par cm² de surface de produit de pâte, et où le ou les alcools de sucre possèdent une taille de granulé comprise entre 50 et 2000 µm.

4. Produit de pâte pré-glacé selon la revendication 3, comprenant en outre une couche d'une composition décorative comprenant un ou plusieurs ingrédients décoratifs choisis dans le groupe constitué par les fines herbes, les composés aromatisants, les noix, les fruits, les ingrédients colorants, les conservateurs, ou des mélanges quelconques de ceux-ci.

5. Produit de pâte pré-glacé selon les revendications 3 ou 4, dans lequel le rapport de la composition de glaçage à la composition décorative sur le produit de pâte est compris entre 5:1 et 1:5.

6. Emballage comprenant un ou plusieurs produits de pâte pré-glacés selon l'une quelconque des revendications 3 à 5, 16-20.

7. Méthode de préparation d'un produit de pâte pré-glacé, comprenant les étapes consistant à :
a) préparer un produit de pâte,
b) revêtir une surface externe dudit produit de pâte par une composition de glaçage comprenant au moins 50% en poids, préférablement au moins 70% en poids, et plus préférablement plus de 90% en poids, d'un alcool de sucre disaccharidique choisi dans le groupe constitué par le lactitol, l'isomalt, le maltitol ou des mélanges quelconques de ceux-ci, où ladite composition se trouve sous la forme d'une poudre ou de granulés et comprend entre 0,01 et 0,10 gramme d'alcool(s) de sucre par cm² de surface de produit de pâte, et où le ou les alcools de sucre possèdent une taille de granulé comprise entre 50 et 2000 µm, et
c) congeler le produit de pâte obtenu à l'étape b).

8. Méthode selon la revendication 7, comprenant l'humidification du produit de pâte obtenu dans l'étape a) préalablement au revêtement par ladite composition de glaçage.

9. Méthode selon les revendications 7 ou 8, comprenant la fourniture du produit de pâte préalablement au revêtement du produit par ladite composition de glaçage.

10. Méthode selon l'une quelconque des revendications 7 à 9, comprenant la fourniture du produit de pâte revêtu préalablement à la congélation.

11. Méthode selon l'une quelconque des revendications 7 à 10, comprenant la pré-cuisson du produit de pâte revêtu préalablement à la congélation.

12. Méthode selon l'une quelconque des revendications 7 à 10, comprenant la pré-cuisson du produit de pâte préalablement au revêtement par ladite composition de glaçage.

13. Méthode selon l'une quelconque des revendications 7 à 12, comprenant l'étape supplémentaire de revêtement du produit de pâte par une composition décorative comprenant un ou plusieurs ingrédients décoratifs choisis dans le groupe constitué par les fines herbes, les composés aromatisants, les noix, les fruits, les ingrédients colorants, les conservateurs, ou des mélanges quelconques de ceux-ci, préalablement au revêtement dudit produit de pâte par ladite composition de glaçage.

14. Méthode selon la revendication 13, comprenant l'étape supplémentaire d'humidification du produit de pâte revêtu par ladite composition décorative préalablement au revêtement dudit produit de pâte par ladite composition de glaçage.

15. Méthode selon l'une quelconque des revendications 7 à 14, comprenant en outre l'étape consistant à emballer un ou plusieurs parmi lesdits produits de pâte congelés dans un emballage.

16. Utilisation selon l'une quelconque des revendications 1 ou 2, produit de pâte pré-glacé selon l'une quelconque des revendications 3 à 5, ou méthode selon l'une quelconque des revendications 7 à 15, où ladite composition comprend de 50 à 100% en poids dudit alcool de sucre disaccharidique, et de 0 à 50% en poids d'autres alcools de sucre.

17. Utilisation selon l'une quelconque des revendications 1, 2, ou 16, produit de pâte pré-glacé selon l'une quelconque des revendications 3 à 5, ou 16, ou méthode selon l'une quelconque des revendications 7 à 15, ou 16, où de l'isomalt est présent selon une quantité en excès dans ladite composition.

18. Utilisation selon l'une quelconque des revendications 1, 2, 16 ou 17, produit de pâte pré-glacé selon l'une quelconque des revendications 3 à 5, 16 ou 17, ou méthode selon l'une quelconque des revendications 7 à 15, 16 ou 17, où lesdits alcools de sucre sont constitués de lactitol et d'isomalt qui sont présents selon un rapport compris entre 10:1 et 1:10.

19. Utilisation selon l'une quelconque des revendications 1, 2, ou 16-18, produit de pâte pré-glacé selon l'une quelconque des revendications 3 à 5, ou 16-18, ou méthode selon l'une quelconque des revendications 7 à 15, ou 16-18, où ladite composition comprend en outre un monosaccharide, un disaccharide, un oligosaccharide, ou un polysaccharide, ou des mélanges quelconques de ceux-ci.

20. Utilisation selon l'une quelconque des revendications 1, 2, ou 16-19, produit de pâte pré-glacé selon l'une quelconque des revendications 3 à 5, ou 16-19, ou méthode selon l'une quelconque des revendications 7 à 15, ou 16-18, où le ou les alcools de sucre sont fournis sous forme granulaire ayant des tailles de granulés compris entre 750 et 2000 µm.

21. Utilisation selon l'une quelconque des revendications 1, 2, ou 16-20, dans laquelle la composition comprend en outre une composition décorative comprenant un ou plusieurs ingrédients décoratifs choisis dans le groupe constitué par les fines herbes, les composés aromatisants, les noix, les fruits, les ingrédients colorants, les conservateurs, ou des mélanges quelconques de ceux-ci.
